# FASCICULE DE BREVET EUROPEEN

(11) **EP 2 727 457 B1**
(45) Date de publication et mention de la délivrance du brevet: **01.07.2015**
(21) Numéro de dépôt: 13187544.5
(22) Date de dépôt: 07.10.2013
(51) Int. Cl.: A01G 3/04, A01D 34/66

(54) **Machine de coupe**
Schneidemaschine
Cutting machine

(30) Priorité: 31.10.2012 FR 1260416
(43) Date de publication de la demande: 07.05.2014
(73) Titulaire: Kuhn-Audureau S.A., 85260 La Copechagnière (FR)
(72) Inventeur: Gautron, Pascal, 85250 SAINT-FULGENT (FR); Robreteau, Maxime, 85170 LE POIRE SUR VIE (FR)
(74) Mandataire: Esch, Esther Evelyne

(56) Documents cités:
- EP-A1- 2 057 892
- BE-A- 682 839
- DE-A1- 2 032 206
- FR-A1- 2 932 949
- GB-A- 2 083 736

## Description

La présente invention concerne une machine de coupe, notamment une tailleuse de haies, comportant un carter présentant un bord frontal et portant des organes de coupe animés en rotation au moyen d'une transmission et décrivant, au cours de leur rotation, des trajectoires de coupe respectives s'étendant, au moins partiellement, en avant du bord frontal, au moins un premier organe de coupe et un deuxième organe de coupe adjacent au premier organe de coupe comportant chacun un plateau portant chacun au moins un couteau, et au moins un couteau étant un couteau pivotant monté à pivotement autour d'un axe solidaire du plateau correspondant et permettant audit couteau pivotant de s'escamoter par pivotement autour dudit axe.

Une tailleuse de haies de ce type est connue du document FR 2 932 949 A1. Sur cette machine, deux organes de coupe adjacents sont conçus de sorte que les trajectoires de coupe de leurs couteaux respectifs se recouvrent partiellement afin d'obtenir une coupe régulière des haies. En raison de l'emploi d'un train d'engrenages pour l'animation des organes de coupe, il est possible de faire travailler ces derniers dans un même plan sans que leurs couteaux respectifs ne s'entrechoquent. Ainsi, les organes de coupe présentent entre eux une orientation angulaire constante évitant à tout moment qu'un couteau d'un organe de coupe ne chevauche un couteau d'un organe de coupe adjacent. Ceci implique qu'au cours de l'avancement du carter dans la végétation à tailler, une branche poussée contre le bord frontal du carter est sectionnée par un seul couteau, ou bien sectionnée par les couteaux d'organes de coupe adjacents à des instants différents. Il en résulte des efforts de coupe importants, notamment lorsque les branches ont un fort diamètre, et une coupe manquant de netteté.

Une autre machine de coupe est connue du document GB 2 083 736 A. Cette machine est du type faucheuse conçue pour couper de l'herbe. Elle comporte un carter abritant deux organes de coupe comportant chacun un plateau portant des couteaux. Les trajectoires de coupe respectives de ces organes de coupe se superposent de manière à couper une largeur continue d'herbe. De plus, un couteau d'un organe de coupe chevauche un couteau de l'organe de coupe adjacent. Ce chevauchement a lieu sur une ligne passant par les axes de rotation respectifs des organes de coupe, lesquels axes de rotation sont placés en arrière d'un bord frontal du carter. De fait, le chevauchement des couteaux a lieu en arrière de ce bord frontal. Cet agencement peut convenir sur une machine pour couper de l'herbe car les brins d'herbe peuvent se courber pour passer sous le carter et atteindre les organes de coupe. Cette conception se révèle a contrario problématique sur une machine de coupe du type tailleuse de haies conçue pour couper des branches dont la rigidité les pousse et les maintient contre le bord frontal du carter avançant dans la végétation. Ces branches ne peuvent alors pas atteindre convenablement les organes de coupe, en particulier les couteaux chevauchants, d'où un front de coupe discontinu, voire une coupe impossible. En sus, il n'est pas prévu sur cette machine connue, que les couteaux chevauchants aient une liberté de mouvement par rapport à leurs plateaux respectifs. Ces couteaux peuvent donc facilement être endommagés en cas de rencontre avec un obstacle. S'ils viennent à être endommagés, les couteaux chevauchants peuvent s'entrechoquer et, ne pouvant s'escamoter, provoquer de graves dommages aux organes de coupe et à leurs moyens d'entraînement.

La présente invention a pour but une machine de coupe qui ne présente pas les inconvénients précités.

A cet effet, une importante caractéristique de l'invention réside dans le fait qu'au cours de la rotation des organes de coupe, un couteau du premier organe de coupe chevauche un autre couteau du deuxième organe de coupe adjacent au premier organe de coupe, en avant du bord frontal du carter. De cette manière, les branches poussées contre le bord frontal du carter, sont sectionnées simultanément par le couteau porté par le premier organe de coupe et par l'autre couteau du deuxième organe de coupe. Ceci est particulièrement avantageux pour la taille de branches de fort diamètre dont la coupe est facilitée par l'action de cisaillement engendrée par chaque couteau de part et d'autre de la branche. L'effort de coupe subi par chacun de ces couteaux est réduit. De plus, le chevauchement de ces couteaux donne un effet de couteau - contre-couteau qui augmente la netteté de la taille. Par ailleurs, l'un au moins de ces couteaux chevauchants étant monté à pivotement sur le plateau correspondant, ce couteau pivotant peut s'escamoter s'il rencontre un obstacle ou une branche trop dure à couper. Les dommages subis par ce couteau sont ainsi réduits.

Selon une caractéristique avantageuse de l'invention, le premier organe de coupe et le deuxième organe de coupe adjacent au premier organe de coupe comportent chacun un plateau portant chacun au moins un couteau pivotant, et au cours de la rotation des organes de coupe, le au moins un couteau pivotant du premier organe de coupe chevauche le au moins un couteau pivotant du deuxième organe de coupe, en avant du bord frontal du carter. De cette manière, si ces deux couteaux, au moment de se chevaucher en avant du carter, rencontrent un obstacle ou une branche trop dure à couper, chacun peut s'escamoter par pivotement autour de son axe respectif d'articulation au plateau correspondant. Les dommages subis par ces deux couteaux sont ainsi réduits. Il pourrait toutefois se produire que l'un de ces couteaux, en raison d'une orientation ou d'une configuration particulière de l'obstacle, ne s'escamote pas complètement et subisse dans ce cas une déformation permanente. Ceci peut par exemple arriver si l'obstacle exerce sur le couteau un effort comportant une composante perpendiculaire au plan de rotation de l'organe de coupe correspondant. Cette composante tend alors à faire fléchir le couteau. Dès lors, ce couteau détérioré pourrait s'entrechoquer avec le couteau chevauchant de l'organe de coupe adjacent. L'énergie du choc provoquerait alors un pivotement de ce couteau chevauchant, éventuellement complété par un pivotement du couteau détérioré dans la mesure où celui-ci comporte encore cette possibilité en dépit des dommages subis. L'énergie du choc ne serait que faiblement répercutée sur le carter et la transmission qu'il abrite, ces derniers étant ainsi préservés de dommages considérables requérant une remise en état fort onéreuse.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue en perspective d'une machine selon l'invention attelée à un tracteur ;
- la figure 2 représente une vue de dessus d'un outil de coupe de la machine de la figure 1 ;
- la figure 3 représente une vue de face d'un outil de coupe de la machine de la figure 1.

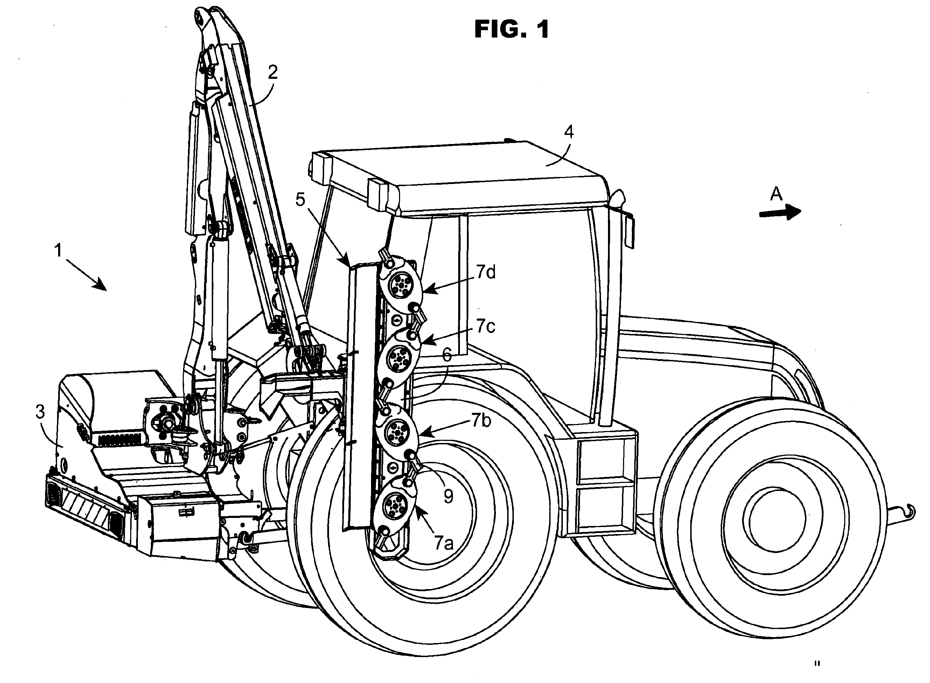

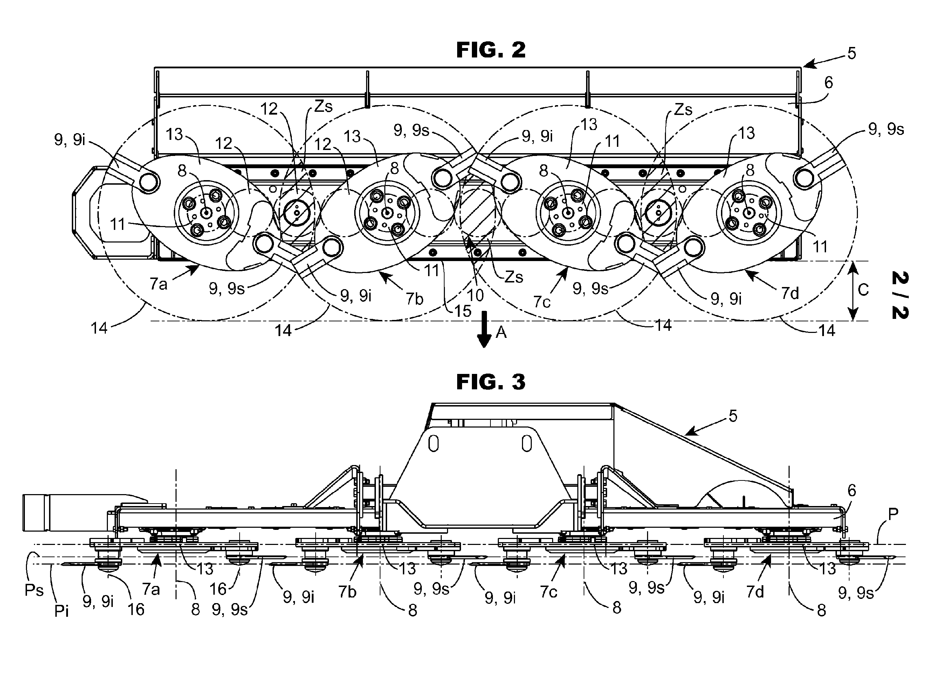

Telle qu'elle est représentée sur la figure 1, la machine (1) selon l'invention est une machine de coupe. Il s'agit notamment une tailleuse de haies conçue pour couper des feuillages et des branchages. La machine (1) est destinée à être placée à l'extrémité d'un bras articulé (2) supporté par une plateforme (3) placée à l'arrière d'un tracteur (4) pouvant se déplacer dans une direction d'avancement (A). Dans la description qui suit, le terme « avant » est à rapporter à cette direction d'avancement (A). Le bras articulé (2) porte un outil de coupe (5). Cet outil de coupe (5) comporte un carter (6) présentant un bord frontal (15). Ce carter (6) porte des organes de coupe (7a, 7b, 7c, 7d) pouvant tourner chacun autour d'un axe de rotation (8). Les axes de rotation (8) sont sensiblement parallèles entre eux. Au cours de leur rotation autour de leurs axes de rotation (8) respectifs, les organes de coupe (7a, 7b, 7c, 7d) décrivent des trajectoires de coupe (14) respectives qui s'étendent, au moins partiellement, en avant du bord frontal (15) du carter (6). Ainsi, lorsque l'outil de coupe avance dans la végétation à tailler, des végétaux tels que des branches poussés contre le bord frontal (15), sont sectionnés sur la portion des trajectoires de coupe (14) dépassant ledit bord frontal (15). L'outil de coupe (5) peut fonctionner essentiellement en position verticale mais peut également travailler de manière horizontale ou en position inclinée par l'intermédiaire du bras articulé (2) qui permet de déplacer l'outil de coupe (5) et le faire agir dans les trois dimensions. Les organes de coupe (7a, 7b, 7c, 7d) sont de préférence alignés suivant une longueur du carter (6). Lorsque le bras articulé (2) se trouve dans une configuration telle que le carter (6) est sensiblement horizontal, les organes de coupe (7a, 7b, 7c, 7d) sont avantageusement disposés sous le carter (6). Les organes de coupe (7a, 7b, 7c, 7d) sont animés en rotation au moyen d'une transmission (10). La transmission (10) comporte des moyens d'engrènement assurant une synchronisation en rotation des organes de coupe (7a, 7b, 7c, 7d). Ces moyens d'engrènement peuvent suivre différentes variantes de réalisation. Suivant une variante de réalisation illustrée par la figure 2, la transmission (10) comporte des roues dentées (11) logées dans le carter (6), lesquelles roues dentées (11) portent les organes de coupe (7a, 7b, 7c, 7d). Les roues dentées (11) sont schématisées par leurs cercles primitifs d'engrènement. La transmission (10) comporte des engrenages (12), eux aussi représentés par leurs cercles primitifs sur la figure 2, lesquels engrenages (12) relient les roues dentées (11) entre elles de manière à former un train d'engrenages qui s'étend suivant la longueur du carter (6). Suivant une variante de réalisation non représentée, la transmission (10) comporte un arbre denté qui relie les roues dentées (11) entre elles. Un tel arbre denté s'étend par exemple suivant la longueur du carter (6) et transmet son mouvement de rotation aux roues dentées (11) par des renvois d'angle. Suivant une autre variante de réalisation non représentée, la transmission (10) comporte une ou plusieurs courroies crantées transmettant une rotation d'une ou plusieurs poulies crantées motrices à des poulies crantées menées dont chacune est solidaire d'un organe de coupe (7a, 7b, 7c, 7d) respectif. Suivant une autre variante de réalisation non représentée, cette ou ces courroies crantées sont remplacées par une ou plusieurs chaînes coopérant avec des pignons remplaçant la ou les poulies motrices et les poulies menées. La transmission (10) est mise en mouvement par exemple au moyen d'un moteur d'entraînement, tel qu'un moteur hydraulique, situé de préférence du côté du carter (6) opposé à celui où se répartissent les organes de coupe (7a, 7b, 7c, 7d).

Au moins un premier organe de coupe (7a respectivement 7c) et un deuxième organe de coupe (7b respectivement 7d) adjacent au premier organe de coupe (7a respectivement 7c), c'est-à-dire disposé immédiatement à côté du premier organe de coupe (7a respectivement 7c), comportent chacun un plateau (13). Dans l'exemple de réalisation des figures, chaque plateau (13) est de forme elliptique. Chaque plateau (13) porte au moins un couteau (9). Au moins un couteau (9) est un couteau pivotant monté à pivotement autour d'un axe (16) solidaire du plateau (13) correspondant et permettant audit couteau pivotant de s'escamoter par pivotement autour dudit axe (16), notamment lorsque le couteau (9) rencontre une pierre ou un poteau. L'axe (16) est sensiblement parallèle à l'axe de rotation (8) de l'organe de coupe (7a, 7b, 7c, 7d) correspondant. L'axe (16) porté par le plateau (13) est distinct de l'axe de rotation (8) de ce plateau (13).

L'invention prévoit qu'au cours de la rotation des organes de coupe (7a, 7b, 7c, 7d), un couteau (9) du premier organe de coupe (7a respectivement 7c) chevauche un autre couteau (9) du deuxième organe de coupe (7b respectivement 7d) adjacent au premier organe de coupe (7a respectivement 7c), en avant du bord frontal (15) du carter (6). Cette caractéristique permet notamment de concevoir les organes de coupe (7a, 7b, 7c, 7d) de telle sorte que les trajectoires de coupe (14) des couteaux (9) aient des diamètres de coupe importants, puisque ces diamètres de coupe ne sont pas limités par le risque d'interférence entre couteaux qui existe lorsque ces couteaux ne se chevauchent pas. Des diamètres de coupe importants engendrent une grande vitesse linéaire des couteaux (9), ce qui bénéficie à la netteté de la coupe et au débit de chantier. Des diamètres de coupe importants rendent également possible une zone de surcoupe (Zs) relativement large entre organes de coupe (7a et 7b), (7c et 7d) adjacents, d'où un effet de couteau - contre-couteau marqué lors de la coupe des végétaux situés entre lesdits organes de coupe (7a et 7b), (7c et 7d) adjacents. Cet effet participe à la netteté de la coupe. Cette zone de surcoupe (Zs) représentée en hachures sur la figure 2 est définie comme l'intersection entre les surfaces circulaires délimitées par les trajectoires de coupe (14) des organes de coupe (7a, 7b, 7c, 7d) adjacents. Enfin, de grands diamètres de coupe engendrent une cote (C) importante entre le bord frontal (15) du carter (6) et l'extrémité avant des trajectoires de coupe (14), facteur très favorable pour un débit de chantier élevé.

Selon une caractéristique avantageuse de l'invention, le premier organe de coupe (7a respectivement 7c) et le deuxième organe de coupe (7b respectivement 7d) adjacent au premier organe de coupe (7a respectivement 7c) comportent chacun un plateau (13) portant chacun au moins un couteau pivotant, et au cours de la rotation des organes de coupe (7a, 7b, 7c, 7d), le au moins un couteau pivotant du premier organe de coupe (7a respectivement 7c) chevauche le au moins un couteau pivotant du deuxième organe de coupe (7b respectivement 7d), en avant du bord frontal (15) du carter (6).

Selon une autre caractéristique avantageuse de l'invention, chaque organe de coupe (7a, 7b, 7c, 7d) comporte un plateau (13) portant chacun au moins un couteau (9), ledit au moins un couteau (9) de chaque organe de coupe (7a, 7b, 7c, 7d) est un couteau pivotant monté à pivotement autour d'un axe solidaire du plateau (13) correspondant et permettant audit au moins un couteau (9) de s'escamoter par pivotement autour dudit axe, et au cours de la rotation des organes de coupe (7a, 7b, 7c, 7d), ledit au moins un couteau pivotant d'un organe de coupe (7a respectivement 7c) chevauche ledit au moins un couteau pivotant d'un autre organe de coupe (7b respectivement 7d) adjacent audit organe de coupe (7a respectivement 7c), en avant du bord frontal (15) du carter (6). Dans l'exemple de réalisation des figures, l'outil de coupe (5) porte quatre organes de coupe (7a, 7b, 7c, 7d). Chaque organe de coupe (7a, 7b, 7c, 7d) porte au moins un couteau (9), notamment deux couteaux (9), ces deux couteaux (9) étant notamment diamétralement opposés par rapport à l'axe de rotation (8) dudit organe de coupe (7a, 7b, 7c, 7d).

Dans l'exemple de réalisation des figures, chaque couteau (9) est un couteau pivotant monté à pivotement autour de l'axe (16) du plateau (13) correspondant et permettant audit couteau pivotant de s'escamoter par pivotement autour dudit axe (16).

Selon une caractéristique avantageuse de l'invention qui ressort de la figure 3, au moins deux organes de coupe (7a, 7b, 7c, 7d) comportent chacun un plateau (13) portant chacun au moins un couteau (9), et les plateaux (13) de ces au moins deux organes de coupe (7a, 7b, 7c, 7d) sont animés en rotation dans un même plan (P). Cette caractéristique permet de standardiser et simplifier la construction de l'outil de coupe (5) par l'emploi de moyens d'entraînement et de plateaux (13) identiques pour ces au moins deux organes de coupe (7a, 7b, 7c, 7d).

Notamment, le au moins un premier organe de coupe (7a respectivement 7c) et le au moins un deuxième organe de coupe (7b respectivement 7d) adjacent à ce premier organe de coupe (7a respectivement 7c), comportant chacun un plateau (13) portant chacun au moins un couteau (9), au moins un de ces couteaux (9) étant un couteau pivotant autour d'un axe (16) solidaire du plateau (13) correspondant, et un couteau (9) du premier organe de coupe (7a respectivement 7c) chevauchant un autre couteau (9) du deuxième organe de coupe (7b respectivement 7d) en avant du bord frontal (15) du carter (6), peuvent être conçus de sorte que ces premier et deuxième organes de coupe (7a respectivement 7c, 7b respectivement 7d) soient animés en rotation dans un même plan (P).

Notamment aussi, le au moins un premier organe de coupe (7a respectivement 7c) et le au moins un deuxième organe de coupe (7b respectivement 7d) adjacent à ce premier organe de coupe (7a respectivement 7c), comportant chacun un plateau (13) portant chacun au moins un couteau pivotant autour d'un axe (16) solidaire du plateau (13) respectif, et le au moins un couteau pivotant du premier organe de coupe (7a respectivement 7c) chevauchant le au moins un couteau pivotant du deuxième organe de coupe (7b respectivement 7d) en avant du bord frontal (15) du carter (6), peuvent être conçus de sorte que ces premier et deuxième organes de coupe (7a respectivement 7c, 7b respectivement 7d) soient animés en rotation dans un même plan (P).

Enfin, tel que cela ressort de la figure 3, il est envisageable que chaque organe de coupe (7a, 7b, 7c, 7d) comporte un plateau (13) portant chacun au moins un couteau (9), et que les plateaux (13) soient tous animés en rotation dans un même plan (P). La construction de l'outil de coupe (5) se trouve de fait standardisée et simplifiée par l'emploi de moyens d'entraînement et de plateaux (13) identiques pour tous les organes de coupe (7a, 7b, 7c, 7d).

La synchronisation en rotation des organes de coupe (7a, 7b, 7c, 7d) obtenue par les moyens d'engrènement que comporte la transmission (10), garantit le maintien dans le temps du chevauchement des couteaux (9) chevauchants. Cette synchronisation évite également les interférences entre organes de coupe (7a, 7b, 7c, 7d) voisins, dans la mesure où les organes de coupe (7a, 7b, 7c, 7d), notamment leurs couteaux (9), sont en bon état et non déformés.

Selon une caractéristique importante de l'invention, visible sur la figure 3, au moins un organe de coupe (7a, 7b, 7c, 7d) comporte un couteau inférieur (9i) et un couteau supérieur (9s), et le couteau supérieur (9s) est plus proche que le couteau inférieur (9i) du plan (P) de rotation dudit organe de coupe (7a, 7b, 7c, 7d). Cette caractéristique peut être obtenue par l'ajout d'une entretoise entre le couteau inférieur (9i) et le plateau (13), ou par l'utilisation d'une entretoise plus épaisse au niveau du couteau inférieur (9i) qu'au niveau du couteau supérieur (9s). Alternativement, le plateau (13) peut comporter un bossage ou renflement au niveau du couteau inférieur (9i) de manière à éloigner celui-ci du plateau (13) davantage que le couteau supérieur (9s).

Il est en particulier envisageable que le premier organe de coupe (7a respectivement 7c) comporte un couteau inférieur (9i) et un couteau supérieur (9s), et que le couteau supérieur (9s) du premier organe de coupe (7a respectivement 7c) chevauche, au cours de la rotation de ce dernier, l'autre couteau (9) du deuxième organe de coupe (7b respectivement 7d) adjacent au premier organe coupe (7a respectivement 7c), en avant du bord frontal (15) du carter (6). Cette disposition ressort de la figure 3.

Une autre alternative prévoit que le premier organe de coupe (7a respectivement 7c) comporte un couteau inférieur (9i) et un couteau supérieur (9s), et que le couteau inférieur (9i) du premier organe de coupe (7a respectivement 7c) chevauche, au cours de la rotation de ce dernier, l'autre couteau (9) du deuxième organe de coupe (7b respectivement 7d) adjacent au premier organe coupe (7a respectivement 7c), en avant du bord frontal (15) du carter (6).

Selon une caractéristique préférentielle de l'invention visible sur la figure 3, il est prévu au moins une paire d'organes de coupe (7a et 7b), (7b et 7c), (7c et 7d) adjacents ayant chacun un couteau inférieur (9i) et un couteau supérieur (9s), et le couteau supérieur (9s) est plus proche que le couteau inférieur (9i) du plan (P) de rotation de l'organe de coupe (7a, 7b, 7c, 7d) auquel ledit couteau supérieur (9s) et ledit couteau inférieur (9i) sont reliés. Grâce au décalage de ces couteaux (9s, 9i), il est possible, moyennant une synchronisation appropriée desdits organes de coupe (7a et 7b), (7b et 7c), (7c et 7d) adjacents, d'éviter les interférences entre leurs couteaux (9s, 9i) respectifs. De plus, chacun de ces organes de coupe (7a, 7b, 7c, 7d) définit, au cours de sa rotation autour de l'axe de rotation (8) correspondant, un plan de taille des végétaux qui passe par le couteau inférieur (9i). Les plans de taille des organes de coupe (7a et 7b), (7b et 7c), (7c et 7d) adjacents peuvent être peu distants l'un de l'autre, voire confondus. Il est donc possible de garantir à la fois un fonctionnement sûr, sans risque de collision des couteaux (9s, 9i), et un front de taille régulier.

La synchronisation desdits organes de coupe (7a et 7b), (7c et 7d) adjacents peut notamment être choisie pour que le couteau supérieur (9s) d'un organe de coupe de ladite paire d'organes de coupe (7a et 7b), (7c et 7d) adjacents chevauche le couteau inférieur (9i) de l'autre organe de coupe de ladite paire (7a et 7b), (7c et 7d), en avant du bord frontal (15) du carter (6). Une telle disposition permet, outre les avantages précités, une coupe nette et précise des végétaux en avant du carter (6), ainsi que des efforts de coupe réduits, par un effet de couteau - contre-couteau.

Selon une caractéristique avantageuse de l'invention, visible sur la figure 3, chaque organe de coupe (7a, 7b, 7c, 7d) comporte un couteau inférieur (9i) et un couteau supérieur (9s), et le couteau supérieur (9s) est plus proche que le couteau inférieur (9i) du plan (P) de rotation de l'organe de coupe (7a, 7b, 7c, 7d) auquel ledit couteau supérieur (9s) et ledit couteau inférieur (9i) sont reliés. Dans l'exemple de réalisation des figures, chacun des organes de coupe (7a, 7b, 7c, 7d) est ainsi conçu. Grâce à ces décalages des couteaux (9s, 9i), il est possible, moyennant une conception appropriée de la transmission (10) pour assurer la synchronisation de tous les organes de coupe (7a, 7b, 7c, 7d), d'éviter toute interférence entre couteaux (9s, 9i). De plus, les plans de taille des végétaux, passant par les couteaux inférieurs (9i), peuvent être peu distants les uns des autres, voire confondus, d'où un front de taille régulier sur toute la largeur de travail de la machine (1).

Dans ce cas, il est préférable que le couteau supérieur (9s) d'un organe de coupe de chaque paire d'organes de coupe (7a et 7b), (7b et 7c), (7c et 7d) adjacents chevauche le couteau inférieur (9i) de l'autre organe de coupe de ladite paire (7a et 7b), (7b et 7c), (7c et 7d). Ceci autorise une coupe particulièrement nette sur toute la largeur de travail de la machine (1), et des efforts de coupe réduits pour tous les organes de coupe (7a, 7b, 7c, 7d). Dans l'exemple de réalisation des figures, il y a au moins deux paires de couteaux (9s, 9i) chevauchants, notamment le couteau supérieur (9s) de l'organe de coupe (7a) qui chevauche le couteau inférieur (9i) de l'organe de coupe (7b), et le couteau supérieur (9s) de l'organe de coupe (7c) qui chevauche le couteau inférieur (9i) de l'organe de coupe (7d). Ces deux chevauchements ont lieu en avant du bord frontal (15) du carter (6). Etant donné que, dans cet exemple de réalisation, les couteaux (9s, 9i) d'un organe de coupe (7a, 7b, 7c, 7d) sont diamétralement opposés par rapport à l'axe de rotation (8), et que les axes de rotation (8) des organes de coupe (7a, 7b, 7c, 7d) successifs sont séparés d'une distance sensiblement constante, le couteau supérieur (9s) de l'organe de coupe (7b) chevauche le couteau inférieur (9i) de l'organe de coupe (7c) dans la partie arrière du carter (6). De plus, les chevauchements des couteaux (9s, 9i) chevauchants ont lieu simultanément, c'est-à-dire que le chevauchement des couteaux (9s, 9i) des organes de coupe (7a) et (7b), celui des couteaux (9s, 9i) des organes (7b) et (7c), enfin celui des couteaux (9s, 9i) des organes de coupe (7c) et (7d), ont lieu en même temps, ainsi qu'il ressort de la figure 2.

Selon une caractéristique particulièrement avantageuse de l'invention visible sur la figure 3, tous les couteaux supérieurs (9s) sont animés en rotation dans un même plan supérieur (Ps), et tous les couteaux inférieurs (9i) sont animés en rotation dans un même plan inférieur (Pi). Ainsi, le front de taille est parfaitement régulier.

Plusieurs variantes de la machine de coupe selon l'invention sont envisageables, il peut notamment être prévu un nombre d'organes de coupe (7a, 7b, 7c, 7d) plus ou moins important, par exemple entre deux et six organes de coupe, éventuellement davantage, même si de manière optimale pour les travaux considérés il est préféré l'emploi de quatre organes de coupe (7a, 7b, 7c, 7d) formés de plateaux (13) munis de couteaux (9), cela sans sortir du cadre de l'invention.

La transmission (10) peut comporter des moyens d'engrènement, notamment des engrenages (12), en nombre et dimensions variables, sans sortir du cadre de l'invention. Il est préférable cependant que les organes de coupe (7a, 7b, 7c, 7d) tournent dans le même sens et donc que le nombre d'engrenages (12) entre les roues dentées (11) soit impair.

Il est envisageable que les organes de coupe (7a, 7b, 7c, 7d) puissent tourner dans les deux sens possibles et il peut donc être prévu d'inverser le sens de rotation du moteur d'entraînement sans sortir du cadre de l'invention.

Il peut être envisagé dans le cadre de l'invention diverses protections autour du carter (6), et il peut être prévu de munir le carter (6) ou/et le moteur d'entraînement d'un capot de protection et de divers moyens de sécurité permettant de protéger aussi bien le matériel que les personnes employant la machine (1).

Bien entendu, l'invention n'est pas limitée aux exemples de réalisation décrits et illustrés, mais elle comprend aussi tous les équivalents techniques ainsi que leurs combinaisons.

## Revendications

1. Machine (1) de coupe, notamment tailleuse de haies, comportant un carter (6) présentant un bord frontal (15) et portant des organes de coupe (7a, 7b, 7c, 7d) animés en rotation au moyen d'une transmission (10) et décrivant, au cours de leur rotation, des trajectoires de coupe (14) respectives s'étendant, au moins partiellement, en avant du bord frontal (15), au moins un premier organe de coupe (7a respectivement 7c) et un deuxième organe de coupe (7b respectivement 7d) adjacent au premier organe de coupe (7a respectivement 7c) comportant chacun un plateau (13) portant chacun au moins un couteau (9), et au moins un couteau (9) étant un couteau pivotant monté à pivotement autour d'un axe (16) solidaire du plateau (13) correspondant et permettant audit couteau pivotant de s'escamoter par pivotement autour dudit axe (16), ***caractérisée en ce qu'***au cours de la rotation des organes de coupe (7a, 7b, 7c, 7d), un couteau (9) du premier organe de coupe (7a respectivement 7c) chevauche un autre couteau (9) du deuxième organe de coupe (7b respectivement 7d), en avant du bord frontal (15) du carter (6).

2. Machine de coupe selon la revendication 1, ***caractérisée en ce que*** le premier organe de coupe (7a respectivement 7c) et le deuxième organe de coupe (7b respectivement 7d) adjacent au premier organe de coupe (7a respectivement 7c) comportent chacun un plateau (13) portant chacun au moins un couteau pivotant, et qu'au cours de la rotation des organes de coupe (7a, 7b, 7c, 7d), le au moins un couteau pivotant du premier organe de coupe (7a respectivement 7c) chevauche le au moins un couteau pivotant du deuxième organe de coupe (7b respectivement 7d), en avant du bord frontal (15) du carter (6).

3. Machine de coupe selon la revendication 1, ***caractérisée en ce que*** chaque organe de coupe (7a, 7b, 7c, 7d) comporte un plateau (13) portant chacun au moins un couteau (9), que ledit au moins un couteau (9) de chaque organe de coupe (7a, 7b, 7c, 7d) est un couteau pivotant monté à pivotement autour d'un axe solidaire du plateau (13) correspondant et permettant audit au moins un couteau (9) de s'escamoter par pivotement autour dudit axe, et qu'au cours de la rotation des organes de coupe (7a, 7b, 7c, 7d), ledit au moins un couteau pivotant d'un organe de coupe (7a respectivement 7c) chevauche ledit au moins un couteau pivotant d'un autre organe de coupe (7b respectivement 7d) adjacent audit organe de coupe (7a respectivement 7c), en avant du bord frontal (15) du carter (6).

4. Machine de coupe selon la revendication 1, ***caractérisée en ce que*** chaque couteau (9) est un couteau pivotant monté à pivotement autour de l'axe (16) du plateau (13) correspondant et permettant audit couteau pivotant de s'escamoter par pivotement autour dudit axe (16).

5. Machine de coupe selon la revendication 1, ***caractérisée en ce que*** la transmission (10) comporte des moyens d'engrènement assurant une synchronisation en rotation des organes de coupe (7a, 7b, 7c, 7d).

6. Machine de coupe selon l'une quelconque des revendications 1 à 5, ***caractérisée en ce qu'***au moins deux organes de coupe (7a, 7b, 7c, 7d) comportent chacun un plateau (13) portant chacun au moins un couteau (9), et que les plateaux (13) de ces au moins deux organes de coupe (7a, 7b, 7c, 7d) sont animés en rotation dans un même plan (P).

7. Machine de coupe selon la revendication 1 ou 2, ***caractérisée en ce qu'***au moins un organe de coupe (7a, 7b, 7c, 7d) comporte un couteau inférieur (9i) et un couteau supérieur (9s), et que le couteau supérieur (9s) est plus proche que le couteau inférieur (9i) d'un / du plan (P) de rotation dudit organe de coupe (7a, 7b, 7c, 7d).

8. Machine de coupe selon la revendication 7, ***caractérisée en ce que*** le premier organe de coupe (7a respectivement 7c) comporte un couteau inférieur (9i) et un couteau supérieur (9s), et que le couteau supérieur (9s) du premier organe de coupe (7a respectivement 7c) chevauche, au cours de la rotation de ce dernier, l'autre couteau (9) du deuxième organe de coupe (7b respectivement 7d) adjacent au premier organe de coupe (7a respectivement 7c), en avant du bord frontal (15) du carter (6).

9. Machine de coupe selon la revendication 7, ***caractérisée en ce que*** le premier organe de coupe (7a respectivement 7c) comporte un couteau inférieur (9i) et un couteau supérieur (9s), et que le couteau inférieur (9i) du premier organe de coupe (7a respectivement 7c) chevauche, au cours de la rotation de ce dernier, l'autre couteau (9) du deuxième organe de coupe (7b respectivement 7d) adjacent au premier organe coupe (7a respectivement 7c), en avant du bord frontal (15) du carter (6).

10. Machine de coupe selon l'une quelconque des revendications 1 à 7, ***caractérisée en ce* qu'**elle comporte au moins une paire d'organes de coupe (7a et 7b), (7b et 7c), (7c et 7d) adjacents ayant chacun un couteau inférieur (9i) et un couteau supérieur (9s), et que le couteau supérieur (9s) est plus proche que le couteau inférieur (9i) d'un / du plan (P) de rotation de l'organe de coupe (7a, 7b, 7c, 7d) auquel ledit couteau supérieur (9s) et ledit couteau inférieur (9i) sont reliés.

11. Machine de coupe selon la revendication 10, ***caractérisée en ce que*** le couteau supérieur (9s) d'un organe de coupe de ladite paire (7a et 7b), (7c et 7d) chevauche le couteau inférieur (9i) de l'autre organe de coupe de ladite paire (7a et 7b), (7c et 7d), en avant du bord frontal (15) du carter (6).

12. Machine de coupe selon l'une quelconque des revendications 1 à 7, ***caractérisée en ce que*** chaque organe de coupe (7a, 7b, 7c, 7d) comporte un couteau inférieur (9i) et un couteau supérieur (9s), et que le couteau supérieur (9s) est plus proche que le couteau inférieur (9i) d'un / du plan (P) de rotation de l'organe de coupe (7a, 7b, 7c, 7d) auquel ledit couteau supérieur (9s) et ledit couteau inférieur (9i) sont reliés.

13. Machine de coupe selon la revendication 12, ***caractérisée en ce que*** le couteau supérieur (9s) d'un organe de coupe de chaque paire d'organes de coupe (7a et 7b), (7b et 7c), (7c et 7d) adjacents chevauche le couteau inférieur (9i) de l'autre organe de coupe de ladite paire (7a et 7b), (7b et 7c), (7c et 7d).

14. Machine de coupe selon l'une quelconque des revendications 10 à 13, ***caractérisée en ce que*** tous les couteaux supérieurs (9s) sont animés en rotation dans un même plan supérieur (Ps), et que tous les couteaux inférieurs (9i) sont animés en rotation dans un même plan inférieur (Pi).

15. Machine de coupe selon l'une quelconque des revendications 1 à 15, ***caractérisée en ce qu'***elle comporte au moins deux paires de couteaux (9, 9s, 9i) chevauchants.

16. Machine de coupe selon l'une quelconque des revendications 1 à 16, ***caractérisée en ce que*** les chevauchements des couteaux (9, 9s, 9i) chevauchants ont lieu simultanément.

## Patentansprüche

1. Schneidmaschine (1), insbesondere Böschungsmäher, mit einem Gehäuse (6), das einen Frontalrand (15) aufweist und mittels einer Übertragungswelle (10) in Drehung versetzte Schneidelemente (7a, 7b, 7c, 7d) trägt und die bei ihrer Drehung jeweilige Schnittbahnen (14) beschreiben, die sich zumindest teilweise vor dem Frontalrand (15) befinden, wobei mindestens ein erstes Schneidelement (7a beziehungsweise 7c) und ein zweites, zum ersten Schneidelement (7a beziehungsweise 7c) benachbartes Schneidelement (7b beziehungsweise 7d) jeweils eine Platte (13) aufweisen, die jeweils mindestens ein Messer (9) trägt, und wobei mindestens ein Messer (9) ein drehbares Messer ist, das um eine mit der entsprechenden Platte (13) fest verbundene Achse (16) drehbar montiert ist und dem drehbaren Messer erlaubt, sich mittels Drehung um die Achse (16) einzuziehen, ***dadurch gekennzeichnet,* dass** bei der Drehung der Schneidelemente (7a, 7b, 7c, 7d) ein Messer (9) des ersten Schneidelements (7a beziehungsweise 7c) ein anderes Messer (9) des zweiten Schneidelements (7b beziehungsweise 7d) vor dem Frontalrand (15) des Gehäuses (6) überlappt.

2. Schneidmaschine nach Anspruch 1, ***dadurch gekennzeichnet,* dass** das erste Schneidelement (7a beziehungsweise 7c) und das zweite, zum ersten Schneidelement (7a beziehungsweise 7c) benachbarte Schneidelement (7b beziehungsweise 7d) jeweils eine Platte (13) aufweisen, die jeweils mindestens ein drehbares Messer trägt, und dass bei der Drehung der Schneidelemente (7a, 7b, 7c, 7d) das mindestens eine drehbare Messer des ersten Schneidelements (7a beziehungsweise 7c) das mindestens eine drehbare Messer des zweiten Schneidelements (7b beziehungsweise 7d) vor dem Frontalrand (15) des Gehäuses (6) überlappt.

3. Schneidmaschine nach Anspruch 1, ***dadurch gekennzeichnet,* dass** jedes Schneidelement (7a, 7b, 7c, 7d) eine Platte (13) aufweist, die jeweils mindestens ein Messer (9) trägt, dass das mindestens eine Messer (9) jedes Schneidelements (7a, 7b, 7c, 7d) ein drehbares Messer ist, das um eine mit der entsprechenden Platte (13) fest verbundene Achse drehbar montiert ist und dem mindestens einen Messer (9) erlaubt, sich mittels Drehung um die Achse einzuziehen, und dass bei der Drehung der Schneidelemente (7a, 7b, 7c, 7d) das mindestens eine drehbare Messer eines Schneidelements (7a beziehungsweise 7c) das mindestens eine drehbare Messer eines anderen, zum Schneidelement (7a beziehungsweise 7c) benachbarte Schneidelement (7b beziehungsweise 7d) vor dem Frontalrand (15) des Gehäuses (6) überlappt.

4. Schneidmaschine nach Anspruch 1, ***dadurch gekennzeichnet,* dass** jedes Messer (9) ein drehbares Messer ist, das drehbar um die Achse (16) der entsprechenden Platte (13) montiert ist und dem drehbaren Messer erlaubt, sich mittels Drehung um die Achse (16) einzuziehen.

5. Schneidmaschine nach Anspruch 1, ***dadurch gekennzeichnet,* dass** die Übertragungswelle (10) Eingriffsmittel aufweist, die eine Drehsynchronisierung der Schneidelemente (7a, 7b, 7c, 7d) gewährleisten.

6. Schneidmaschine nach irgend einem der Ansprüche 1 bis 5, ***dadurch gekennzeichnet,* dass** mindestens zwei Schneidelemente (7a, 7b, 7c, 7d) jeweils eine Platte (13) aufweisen, die jeweils mindestens ein Messer (9) trägt, und dass die Platten (13) dieser mindestens zwei Schneidelemente (7a, 7b, 7c, 7d) in einer selben Ebene (P) in Drehung versetzt sind.

7. Schneidmaschine nach Anspruch 1 oder 2, ***dadurch gekennzeichnet,* dass** mindestens ein Schneidelement (7a, 7b, 7c, 7d) ein unteres Messer (9i) und ein oberes Messer (9s) aufweist und dass das obere Messer (9s) einer / der Drehebene (P) des Schneidelements (7a, 7b, 7c, 7d) näher ist als das untere Messer (9i).

8. Schneidmaschine nach Anspruch 7, ***dadurch gekennzeichnet,* dass** das erste Schneidelement (7a beziehungsweise 7c) ein unteres Messer (9i) und ein oberes Messer (9s) aufweist und dass das obere Messer (9s) des ersten Schneidelements (7a beziehungsweise 7c) bei der Drehung dieses letzteren das andere Messer (9) des zweiten, zum ersten Schneidelement (7a beziehungsweise 7c) benachbarten Schneidelements (7b beziehungsweise 7d) vor dem Frontalrand (15) des Gehäuses (6) überlappt.

9. Schneidmaschine nach Anspruch 7, ***dadurch gekennzeichnet,* dass** das erste Schneidelement (7a beziehungsweise 7c) ein unteres Messer (9i) und ein oberes Messer (9s) aufweist und dass das untere Messer (9i) des ersten Schneidelements (7a beziehungsweise 7c) bei der Drehung dieses letzteren das andere Messer (9) des zweiten, zum ersten Schneidelement (7a beziehungsweise 7c) benachbarten Schneidelements (7b beziehungsweise 7d) vor dem Frontalrand (15) des Gehäuses (6) überlappt.

10. Schneidmaschine nach irgend einem der Ansprüche 1 bis 7, ***dadurch gekennzeichnet,* dass** sie mindestens ein Paar benachbarte Schneidelemente (7a und 7b), (7b und 7c), (7c und 7d) aufweist, die jeweils ein unteres Messer (9i) und ein oberes Messer (9s) haben und dass das obere Messer (9s) näher als das untere Messer (9i) zu einer / der Drehebene (P) des Schneidelements (7a, 7b, 7c, 7d) ist, mit dem das obere Messer (9s) und das untere Messer (9i) verbunden sind.

11. Schneidmaschine nach Anspruch 10, ***dadurch gekennzeichnet,* dass** das obere Messer (9s) eines Schneidelements des Paars (7a und 7b), (7c und 7d) das untere Messer (9i) des anderen Schneidelements des Paars (7a und 7b), (7c und 7d) vor dem Frontalrand (15) des Gehäuses (6) überlappt.

12. Schneidmaschine nach irgend einem der Ansprüche 1 bis 7, ***dadurch gekennzeichnet,* dass** jedes Schneidelement (7a, 7b, 7c, 7d) ein unteres Messer (9i) und ein oberes Messer (9s) aufweist und dass das obere Messer (9s) näher als das untere Messer (9i) zu einer / der Drehebene (P) des Schneidelements (7a, 7b, 7c, 7d) ist, mit dem das obere Messer (9s) und das untere Messer (9i) verbunden sind.

13. Schneidmaschine nach Anspruch 12, ***dadurch gekennzeichnet,* dass** das obere Messer (9s) eines Schneidelements jedes Paars benachbarter Schneidelemente (7a und 7b), (7b und 7c), (7c und 7d) das untere Messer (9i) des anderen Schneidelements des Paars (7a und 7b), (7b und 7c), (7c und 7d) überlappt.

14. Schneidmaschine nach irgend einem der Ansprüche 10 bis 13, ***dadurch gekennzeichnet,* dass** alle oberen Messer (9s) in einer selben oberen Ebene (Ps) in Drehung versetzt sind und dass alle unteren Messer (9i) in einer selben unteren Ebene (Pi) in Drehung versetzt sind.

15. Schneidmaschine nach irgend einem der Ansprüche 1 bis 15, ***dadurch gekennzeichnet,* dass** sie mindesten zwei Paare überlappende Messer (9, 9s, 9i) aufweist.

16. Schneidmaschine nach irgend einem der Ansprüche 1 bis 16, ***dadurch gekennzeichnet,* dass** die Überlappungen der überlappenden Messer (9, 9s, 9i) gleichzeitig stattfinden.

## Claims

1. Cutting machine (1), in particular a hedge cutter, comprising a casing (6) having a frontal edge (15) and carrying cutting elements (7a, 7b, 7c, 7d) driven in rotation by means of a transmission shaft (10) and describing, during their rotation, respective cutting courses (14) extending at least partially in front of the frontal edge (15), at least a first cutting element (7a, 7c, respectively) and a second cutting element (7b, 7d, respectively) adjacent to the first cutting element (7a, 7c, respectively) each comprising a plate (13) each carrying at least one knife (9), and at least one knife (9) being a rotating knife mounted pivoting around an axis (16) rigidly fastened to the corresponding plate (13) and allowing the said rotating knife to retract by pivoting around the said axis (16), ***characterized in that*** during the rotation of the cutting elements (7a, 7b, 7c, 7d), a knife (9) of the first cutting element (7a, 7c, respectively) overlaps another knife (9) of the second cutting element (7b, 7d, respectively), in front of the frontal edge (15) of the casing (6).

2. Cutting machine according to claim 1, ***characterized in that*** the first cutting element (7a, 7c, respectively) and the second cutting element (7b, 7d, respectively) adjacent to the first cutting element (7a, 7c, respectively) each comprise a plate (13) each carrying at least one rotating knife, and that during the rotation of the cutting elements (7a, 7b, 7c, 7d), the at least one rotating knife of the first cutting element (7a, 7c, respectively) overlaps the at least one rotating knife of the second cutting element (7b, 7d, respectively), in front of the frontal edge (15) of the casing (6).

3. Cutting machine according to claim 1, ***characterized in that*** each cutting element (7a, 7b, 7c, 7d) comprises a plate (13) each carrying at least one knife (9), the said at least one knife (9) of each cutting element (7a, 7b, 7c, 7d) is a rotating knife mounted pivoting around an axis rigidly fastened to the corresponding plate (13) and allowing the said at least one knife (9) to retract by pivoting around the said axis, and that during the rotation of the cutting elements (7a, 7b, 7c, 7d), the said at least one rotating knife of a cutting element (7a, 7c, respectively) overlaps the said at least one rotating knife of another cutting element (7b, 7d, respectively) adjacent to the said cutting element (7a, 7c, respectively), in front of the frontal edge (15) of the casing (6).

4. Cutting machine according to claim 1, ***characterized in that*** each knife (9) is a rotating knife mounted pivoting around the axis (16) of the corresponding plate (13) and allowing the said rotating knife to retract by pivoting around the said axis (16).

5. Cutting machine according to claim 1, ***characterized in that*** the transmission shaft (10) comprises gearing means ensuring a rotary synchronization of the cutting elements (7a, 7b, 7c, 7d).

6. Cutting machine according to any one of claims 1 to 5, ***characterized in that*** at least two cutting elements (7a, 7b, 7c, 7d) each comprise a plate (13) each carrying at least one knife (9), and that the plates (13) of those at least two cutting elements (7a, 7b, 7c, 7d) are driven in rotation in a same plane (P).

7. Cutting machine according to claim 1 or 2, ***characterized in that*** at least one cutting element (7a, 7b, 7c, 7d) comprises a lower knife (9i) and an upper knife (9s), and that the upper knife (9s) is closer than the lower knife (9i) to a / the rotation plane (P) of the said cutting element (7a, 7b, 7c, 7d).

8. Cutting machine according to claim 7, ***characterized in that*** the first cutting element (7a, 7c, respectively) comprises a lower knife (9i) and an upper knife (9s), and that the upper knife (9s) of the first cutting element (7a, 7c, respectively) overlaps, during the rotation of the latter, the other knife (9) of the second cutting element (7b, 7d, respectively) adjacent to the first cutting element (7a, 7c, respectively), in front of the frontal edge (15) of the casing (6).

9. Cutting machine according to claim 7, ***characterized in that*** the first cutting element (7a, 7c, respectively) comprises a lower knife (9i) and an upper knife (9s), and that the lower knife (9i) of the first cutting element (7a, 7c, respectively) overlaps, during the rotation of the latter, the other knife (9) of the second cutting element (7b, 7d, respectively) adjacent to the first cutting element (7a, 7c, respectively), in front of the frontal edge (15) of the casing (6).

10. Cutting machine according to any one of claims 1 to 7, ***characterized in that*** it comprises at least one pair of adjacent cutting elements (7a and 7b), (7b and 7c), (7c and 7d) each having a lower knife (9i) and an upper knife (9s), and that the upper knife (9s) is closer than the lower knife (9i) to a / the rotation plane (P) of the cutting element (7a, 7b, 7c, 7d) to which the said upper knife (9s) and the said lower knife (9i) are connected.

11. Cutting machine according to claim 10, ***characterized in that*** the upper knife (9s) of a cutting element of the said pair (7a and 7b), (7c and 7d) overlaps the lower knife (9i) of the other cutting element of the said pair (7a and 7b), (7c and 7d), in front of the frontal edge (15) of the casing (6).

12. Cutting machine according to any one of claims 1 to 7, ***characterized in that*** each cutting element (7a, 7b, 7c, 7d) comprises a lower knife (9i) and an upper knife (9s), and that the upper knife (9s) is closer than the lower knife (9i) to a / the rotation plane (P) of the cutting element (7a, 7b, 7c, 7d) to which the said upper knife (9s) and the said lower knife (9i) are connected.

13. Cutting machine according to claim 12, ***characterized in that*** the upper knife (9s) of a cutting element of each pair of adjacent cutting elements (7a and 7b), (7b and 7c), (7c and 7d) overlaps the lower knife (9i) of the other cutting element of the said pair (7a and 7b), (7b and 7c), (7c and 7d).

14. Cutting machine according to any one of claims 10 to 13, ***characterized in that*** all of the upper knives (9s) are driven in rotation in a same upper plane (Ps), and that all of the lower knives (9i) are driven in rotation in a same lower plane (Pi).

15. Cutting machine according to any one of claims 1 to 15, ***characterized in that*** it comprises at least two pairs of overlapping knives (9, 9s, 9i).

16. Cutting machine according to any one of claims 1 to 16, ***characterized in that*** the overlaps of the overlapping knives (9, 9s, 9i) occur simultaneously.
